# EUROPÄISCHE PATENTSCHRIFT

(11) **EP 2 686 258 B1**
(45) Veröffentlichungstag und Bekanntmachung des Hinweises auf die Patenterteilung: **14.09.2016**
(21) Anmeldenummer: 12709868.9
(22) Anmeldetag: 16.03.2012
(51) Int. Cl.: B65G 47/61, B65G 9/00

(54) **HÄNGEFÖRDERSYSTEM UND VERFAHREN ZUM AUTOMATISIERTEN ENTLADEN EINER TRANSPORTTASCHE**
OVERHEAD CONVEYOR AND METHOD FOR THE AUTOMATED UNLOADING OF A TRANSPORT BAG
CONVOYEUR AÉRIEN ET PROCÉDÉ DE DÉCHARGEMENT AUTOMATISÉ D'UN SAC DE TRANSPORT

(30) Priorität: 17.03.2011 DE 102011015138
(43) Veröffentlichungstag der Anmeldung: 22.01.2014
(73) Patentinhaber: SSI Schäfer Peem GmbH, 8051 Graz (AT)
(72) Erfinder: FANKHAUSER, Robert, A-8143 Dobl (AT); GROESSL, Christoph, A-8010 Graz (AT); WINKLER, Max, A-8010 Graz (AT)
(74) Vertreter: Witte, Weller & Partner Patentanwälte mbB
(86) Internationale Anmeldenummer: PCT/EP2012/054636
(87) Internationale Veröffentlichungsnummer: WO 2012/123564

(56) Entgegenhaltungen:
- EP-A1- 2 418 160
- DE-A1- 19 857 575
- DE-A1-102004 018 569
- FR-A1- 2 776 624

## Beschreibung

Die vorliegende Erfindung betrifft ein Hängefördersystem sowie ein Verfahren zum automatisierten Entladen.

In der deutschen Patentanmeldung DE 10 2008 061 685 A1 wird eine Transporttäsche für eine Hängeförderanlage offenbart, die mittels einer Beladestation automatisiert beladen wird. Die Transporttasche besteht aus einer stabilen Tragwand und einer Boden-Seiten-Wand, wobei die Boden-Seiten-Wand aus einem flexiblen Material besteht, beispielsweise einem stabilen Gewebe oder einer stabilen Folie. Die in sich steife Tragwand weist einen Tragrahmen auf. Die Transporttasche ist seitlich offen.

Ein Nachteil der Transporttasche ist darin zu sehen, dass die geladenen Stückgüter während einer Fahrt durch die Förderanlage seitlich herausfallen können. Ein weiterer Nachteil ist darin zu sehen, dass die Transporttaschen nicht automatisiert entladen werden können. Eine Entladung erfolgt durch ein Drehen der Transporttasche auf den Kopf, so dass das geladene Stückgut aus einer Öffnung heraus fällt, die durch einen umlaufenden Bügel in der Oberseite der Transporttasche definiert ist. Die Stückgüter können durch das Fallen unter Umständen beschädigt werden.

Die DE 10 2004 018 569 A1 offenbart

ein Hängefördersystem mit einer Transporttasche mit einem Grundkörper und einer daran anschließenden Aufnahme, wobei der Grundkörper eine Oberseite, eine Unterseite, seitliche Seiten und Stirnseiten aufweist, wobei die Aufnahme einen Boden, eine Oberseite, Stirnseiten und seitliche Seiten aufweist, wobei die Stirnseiten des Grundkörpers offenen ausgebildet sind, wobei die Unterseite des Grundkörpers an die Oberseite der Aufnahme koppelt, um einen Aufnahmeraum unterhalb des Grundkörpers zu definieren, und wobei die Unterseite des Grundkörpers der Transporttasche offen ausgebildet ist, wobei die Oberseite der Aufnahme offen ausgebildet ist, wobei die seitlichen Seiten des Grundkörpers, die seitlichen Seiten der Aufnahme und der Boden der Aufnahme geschlossen ausgebildet sind, wobei die seitlichen Seiten der Aufnahme derart ausgebildet sind, dass der Boden der Transporttasche anhebbar ist, und wobei die Transporttasche jeweils eine Rückhalteeinrichtung aufweist, die sich im Bereich der Stirnseiten der Aufnahme erstreckt

Die DE 1 228 087 offenbart eine Transporttasche für Briefsortiermaschinen.

Die DE 198 57 575 A1 offenbart eine Transporttasche für Autotürverkleidungen.

Es ist daher eine Aufgabe der vorliegenden Erfindung, ein Hänge fördersystem vorzusehen, die eine Transporttasche automatisiert und ohne Beschädigungen von geladenen Stückgütern entladen werden kann und in welcher geladene Stückgüter verliersicher transportierbar sind.

Diese Aufgabe wird durch ein Hängefördersystem gemäß Anspruch 1 gelöst.

Die Rückhalteeinrichtung verhindert, dass die geladenen Stückgüter seitlich aus der Transporttasche fallen können, während die Transporttasche entlang des Hängeförderers transportiert wird. Sobald die Transporttasche einen Entladepunkt erreicht hat, kann die Aufnahme bzw. deren Boden angehoben werden, so dass ein Schieber seitlich in die Tasche eingeführt werden kann, um das Stückgut horizontal auszuschieben. Das Stückgut wird also nicht fallen gelassen, sondern "sanft" entladen. Das Stückgut kann dadurch nicht beschädigt werden. Der Transport selbst ist sicher.

Grundsätzlich wird auf diese Weise eine automatisierte Entladung möglich. Manuelle Arbeit wird allenfalls im Falle weiterer Arbeitsschritte (Verpacken, Etikettieren, etc.) benötigt. Vorzugsweise können Zielbehälter (auch Kartons, Tablare, Paletten, etc.) direkt beladen werden, ohne dass menschliche Arbeitskraft eingesetzt werden muss.

Bei einer bevorzugten Ausführungsform der Tasche ist der Grundkörper ein Parallepiped und vorzugsweise sogar ein Quader oder Kubus. Bei der Wahl eines Parallepipeds für den Grundkörper lässt sich auf einfache Weise ein Rahmen für den Grundkörper bauen, der wiederum die Formstabilität des Grundkörpers gewährleistet. Die Formstabilität kann insbesondere für den Entladevorgang wichtig sein, weil dort der Schieber mit dem Querschnitt des Grundkörpers wechselwirkt. Um eine hohe Effizienz zu erreichen, wird der Querschnitt des Schiebers im Wesentlichen genauso groß gewählt wie der Querschnitt des Grundkörpers, in den hinein der Schieber eingeführt wird.

Ferner ist es von Vorteil, wenn die Tasche derart ausgebildet ist, dass ein Querschnitt entlang der Stirnseite des Grundkörpers während eines Transportvorgangs und eines Entladevorgangs unveränderlich ist.

Bei einer weiteren bevorzugten Ausgestaltung der Tasche sind die Stirnseiten der Aufnahme geschlossen ausgebildet. Die Stirnseiten können zusätzlich auch flexibel ausgebildet sein.

Die Stirnseiten der Aufnahme sind in diesem Fall ebenfalls Teil der Rückhalteeinrichtung und Verhindern ein unbeabsichtigtes seitliches Entladen der Tasche, insbesondere während eines Transports der Tasche durch ein Hängefördersystem.

Insbesondere sind geschlossene Seiten der Transporttasche mit einem Gewebe bespannt.

Die Umwicklung des Grundkörpers der Aufnahme in umfänglicher Richtung mit einer Stoffbahn kann ohne größeren technischen Aufwand bewerkstelligt werden. Die umfängliche Umwicklung verhindert ein Herausfallen der Stückgüter während die Transporttasche innerhalb des Hängefördersystems bewegt wird.

Vorzugsweise ist der Boden der Aufnahme aus einem steifen Material gebildet. Der Boden ist in diesem Fall flächig und garantiert so, dass das zu entladende Stückgut auf einer ebenen Fläche steht, wenn der Boden der Aufnahme durch die Hubeinrichtung durch die Entladestellung angehoben wird. In diesem Fall befindet sich das zu entladende Stückgut auf dem Niveau der Unterseite des Grundkörpers und kann das Innere 35 des Grundkörpers kollisionsfrei verlassen, d. h. es kommt zu keiner Kollision zwischen dem zu entladenden Stückgut und der Rückhalteeinrichtung.

Dabei ist es besonders von Vorteil, wenn die Fläche des Bodens im Wesentlichen der Fläche der Unterseite des Grundkörpers gleicht.

Wenn die beiden Flächen im Wesentlichen gleich groß sind, d. h. deckungsgleich sind, kann das zu entladende Stückgut sich nicht in einem Spalt zwischen dem Boden und der Unterseite des Grundkörpers verhaken und somit eine automatisierte Entladung verhindern.

Bei einer weiteren bevorzugten Ausführungsform der Tasche sind zumindest untere Kanten der Stirnseiten des Grundkörpers oder obere Kanten der Stirnseiten der Aufnahme durch jeweils eine Strebe, vorzugsweise eine Draht- oder Karbonstrebe, definiert.

In diesem Fall können die Stirnseiten der Aufnahme offen ausgebildet sein. Seitliches Herausfallen wird also allein durch die Strebe verhindert. Das Gewicht der Tasche verringert sich dadurch. Die Herstellung der Tasche vereinfacht sich dadurch.

Weiter ist es bevorzugt, wenn zumindest alle Kanten des Grundkörpers durch miteinander verbundene Streben definiert sind, die ein Gestell definieren, das vorzugsweise derart mit einem Stoff bespannt ist, dass der Stoff als Stoffbahn um die Oberseite des Grundkörpers, die seitlichen Seiten des Grundkörpers, die seitlichen Seiten der Aufnahme und den Boden der Aufnahme umläuft und im Bereich der Aufnahme in einem unbeladenen Zustand der Transporttasche durchhängt.

Ferner ist es von Vorteil, wenn die Entladestation ferner mindestens eine Fixiereinrichtung aufweist.

Mit der Fixiereinrichtung kann die Transporttasche in der Entladestellung derart fixiert werden, dass der Schieber kollisionsfrei ins Innere der Transporttasche einführbar ist.

In einer weiteren vorteilhaften Ausführungsform weist das Hängefördersystem ferner eine Arbeitsstation auf, die direkt an die Entladestation angrenzend angeordnet ist und die eine Arbeitsfläche umfasst, die horizontal orientiert ist und die sich im Wesentlichen bündig an die Unterseite der Transporttasche anschließt.

Auf diese Weise wird verhindert, dass die entladenen Stückgüter aus der Tasche fallen. Die Stückgüter werden auf "sanfte" Art und Weise seitlich ausgeschoben und beim automatisierten Entladen nicht beschädigt.

Insbesondere kann das Hängefördersystem eine Zielstelle aufweisen, wo ein Auftrags-Ladehilfsmittel derart positionierbar ist, dass sich eine obere Öffnungskante des Auftrags-Ladehilfsmittels im Wesentlichen bündig an die Unterseite der Transporttasche anschließt.

Ferner ist es von Vorteil, wenn die Zielstelle Teil eines Fördersystems ist, das Auftrags-Ladehilfsmittel transportiert.

Die oben erwähnte Aufgabe wird schließlich durch ein Verfahren zum automatisierten Entladen gemäß Anspruch 13 gelöst.
- Fig. 1: eine perspektivische Ansicht einer ersten Ausführungsform einer Hängeförder-Transporttasche;
- Fig. 2A und 2B: Schnittansichten einer beladenen Transporttasche gemäß der Fig. 1 entlang der Linie II-II der Fig. 1 in einer Transportstellung (Fig. 2A) und in einer Entladestellung (Fig. 2B);
- Fig. 3: eine Vorderansicht einer weiteren Transporttasche in einem unbeladenen Zustand;
- Fig. 4: eine Vorderansicht einer noch weiteren Transporttasche in einem unbeladenen Zustand;
- Fig. 5: eine perspektivische Ansicht eines Hängefördersystems gemäß der Erfindung;
- Fig. 6: eine perspektivische Ansicht eines weiteren Hängefördersystem gemäß der Erfindung;
- Fig. 7A und 7B: eine Vorderansicht (Fig. 7A) und eine Seitenansicht einer weiteren Variante einer Transporttasche (Fig. 7B) inklusive einer Entladestation;
- Fig. 8A - 8C: eine weitere Transporttasche (Fig. 8), die aus einer Aufnahme (Fig. 8B) mit steifen Seitenwänden und einem Grundkörper (Fig. 8C) gebildet ist, jeweils in perspektivischer Darstellung; und
- Fig. 9: ein Flussdiagramm eines Verfahrens zum automatisierten Entladen einer Transporttasche.
In der nachfolgenden Beschreibung der Figuren werden gleiche Einheiten, Komponenten, Merkmale oder Ähnliches mit den gleichen Bezugszeichen bezeichnet werden. Abgewandelte Gegenstände werden mit abgewandelten Bezugszeichen bezeichnet werden.

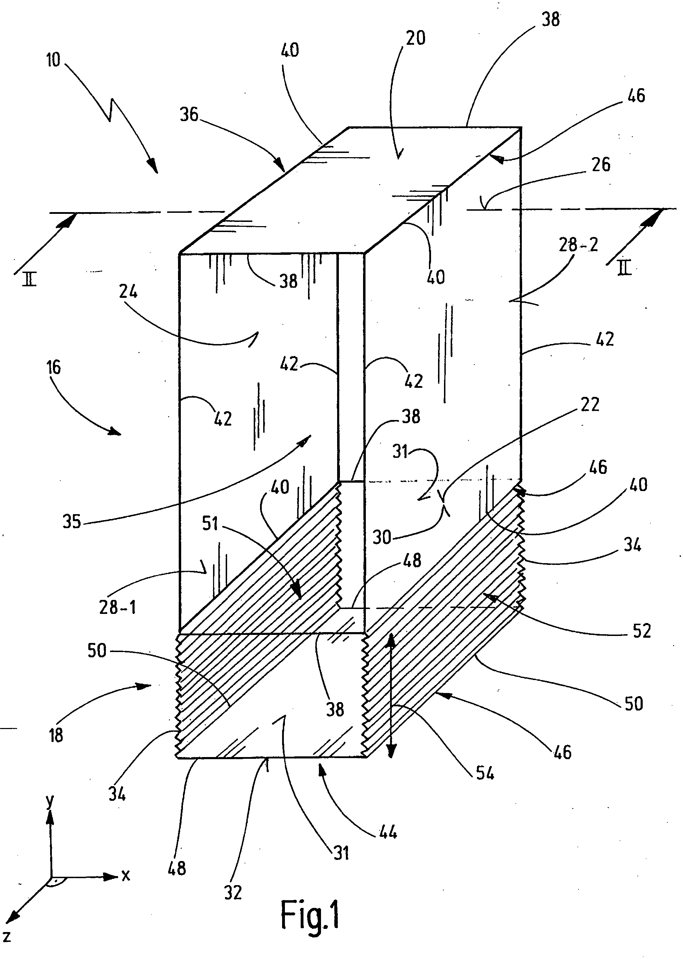

In Fig. 1 ist eine erste Ausführungsform einer Hängeförder-Transporttasche 10 in einer perspektivischen Ansicht gezeigt, die entlang einer Längsrichtung X transportiert und in einer Querrichtung Z be- und entladen wird. Die Hängeförder-Transporttasche 10 wird nachfolgend auch kurz als "Transporttasche 10" oder "Tasche 10" bezeichnet werden.

Die Transporttasche 10 weist eine (nicht dargestellte) Befestigungseinrichtung 12 auf, zum Beispiel einen (nicht dargestellten) Haken 14. Des Weiteren weist die Transporttasche 10 einen Grundkörper 16 und eine daran anschließende Aufnahme 18 auf.

Der Grundkörper 16 weist eine Oberseite 20, eine Unterseite 22, eine vordere Stirnseite 24, eine hintere Stirnseite 26 sowie seitliche Seiten 28 auf. Die Aufnahme 18 weist eine Oberseite 30, Stirnseiten 31, einen Boden 32 sowie seitliche Seiten 34 auf.

Der Grundkörper 16 hat vorzugsweise die Form eines Parallelepipeds. Ein Parallelepiped stellt einen geometrischen Körper dar, der von sechs paarweise kongruenten (deckungsgleichen) in parallelen Ebenen liegenden Parallelogrammen begrenzt wird. Das Parallelepiped hat 12 Kanten, von denen je vier parallel verlaufen und untereinander gleich lang sind. Quader und Würfel (Kubus) sind Sonderformen des Parallepipeds. In der Fig. 1 ist exemplarisch ein Quader sowohl für den Gruridkörper 16 als auch für die Aufnahme18 gezeigt.

Ein Inneres 35 des Grundkörpers 16 entspricht im Wesentlichen dem Volumen des Quaders des Grundkörpers 16.

Die Kanten des Grundkörpers 16 können durch kurze, horizontale Streben 38 und lange horizontale Streben 40 im Bereich der Oberseite 20 und/oder der Unterseite 22 definiert sein, die zumindest in der horizontalen Ebene (XZ) miteinander verbunden sind. Ferner können vertikal orientierte Kanten des Grundkörpers 16 durch vertikale Streben 42 realisiert sein, die ein steifes (Grund-)Gestell 36 definieren, wenn alle Streben 38 bis 42 miteinander verbunden sind. Das Gestell 36 kann z.B. als Draht- oder Karbongestell ausgebildet sein.

Die Aufnahme 18 kann zusätzlich oder alternativ eine vorzugsweise durchgehend flächige Platte 44 als Boden 32 aufweisen. Alternativ kann der Boden 32 durch einen Rahmen 46 gebildet werden, der aus kurzen Streben 48 entlang den Stirnseiten 31 und damit verbundenen, langen Streben 50 entlang der seitlichen Seiten 34 gebildet sein kann. Die Oberseite 30 der Aufnahme 18 ist vorzugsweise deckungsgleich zur Unterseite 22 des Grundkörpers 16 und vorzugsweise im Wesentlichen deckungsgleich zum Boden 32 der Aufnahme 18.

In Fig. 1 ist die Transporttasche 10 in einem unbeladenen Zustand gezeigt. Die Aufnahme 18 definiert im unbeladenen Zustand der Tasche 10 einen separaten Aufnahmeraum 51 unterhalb des Grundkörpers 16, der nicht durch einen durchhängenden Boden des Grundkörpers 16 gebildet ist. Der Boden bzw. die Unterseite des Grundkörpers 16 ist offen. Die seitlichen Seiten 34 der Aufnahme 18 können wie ein Balg 52 ausgebildet sein, um die seitlichen Seiten 34 entlang der Vertikalen Y komprimieren und auseinanderziehen zu können, wie es durch einen Doppelpfeil 54 in Fig. 1 angedeutet ist.

Die in der Fig. 1 links dargestellte seitliche Seitenwand 28-1 und die in der Fig. 1 rechts dargestellte seitliche Seitenwand 28-2 des Grundkörpers 16 sind vorzugsweise geschlossen ausgebildet, um zu verhindern, dass in einem beladenen Zustand der Tasche 10 ein Ladegut aus der Transporttasche 10 in der Längsrichtung X herausfallen kann. Üblicherweise wird die Transporttasche 10 in der Längsrichtung X entlang des Hängeförderers transportiert. Auch die seitlichen Seiten 34 und der Boden 32 der Aufnahme 18 sind geschlossen ausgebildet. Vorzugsweise ist auch die Oberseite 20 des Grundkörpers 16 geschlossen ausgebildet.

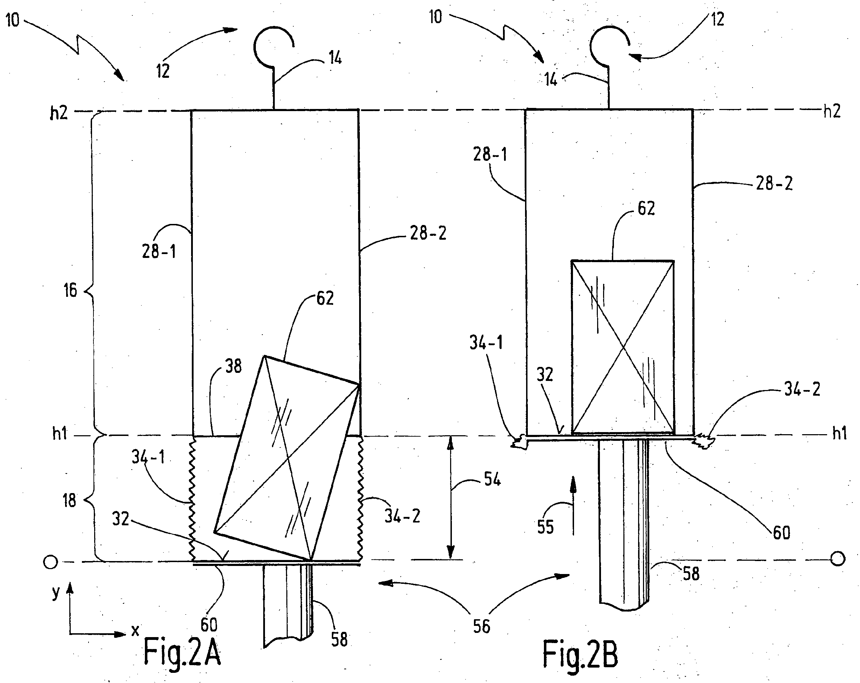

Eine "geschlossene" Ausbildung bedeutet, dass das Ladegut im beladenen Zustand der Transporttasche 10 nicht durch die Transportbewegung aus der Transporttasche 10 herausfallen kann. Um z.B. ein Herausfallen des Ladeguts in der Querrichtung Z zu verhindern, ist zumindest entlang der Verbindungslinie (Übergangslinie) zwischen dem Grundkörper 16 und der Aufnahme 18 im Bereich der Stirnseiten 24, 26 und 31 eine Rückhalteeinrichtung vorgesehen. In der Fig. 1 ist die Rückhalteeinrichtung durch die kurzen, horizontalen Streben 38 der Unterseite 22 des Grundkörpers 16 realisiert. Diese kurzen Streben 38 verhindern sowohl auf Seite der vorderen Stirnseite 24 als auch auf Seite der hinteren Stirnseite 26 ein Herausfallen des Ladeguts in der Querrichtung Z, selbst wenn die Stirnseiten 24, 26 und 31 im Übrigen offen ausgebildet sind, wie es nachfolgend im Zusammenhang mit den Figuren 2A und 2B noch genauer erläutert werden wird.

Niveaugleiche Streben 38 und 40 (ohne die vertikalen Streben 42) sowie vorzugsweise die Streben 48 und 50 können jeweils einen rechteckigen Rahmen 46 bilden. Diese Rahmen 46 können in Umfangsrichtung der Tasche 10, d.h. außen um die Stirnseiten 24, 26 und 31 herum, z.B. mit einer Stoffbahn umwickelt werden, so dass die Stirnseiten 24, 26 und 31 offen bleiben. Die sich aus den Stirnseiten 24 und 31 bzw. 26 und 31 ergebenden Gesamtstirnseiten sind in diesem Fall nur noch durch die kurzen Streben 38 des mittleren Rahmens 46 voneinander getrennt. Der Boden 32 kann dabei zusätzlich durch eine Platte 44 unterstützt werden, die in den unteren Rahmen 46 flächig eingelegt werden kann.

In den Figuren 2A und 2B sind Schnittansichten entlang einer Linie II-II in der Fig. 1 durch eine beladene Transporttasche 10 gemäß der Fig. 1 gezeigt. In Fig. 2A ist Transporttasche 10 in einer Transportstellung gezeigt. In der Figur 2B ist die Transporttasche 10 in einer Entladestellung gezeigt. Die Transporttasche 10 ist in den Figuren 2A und 2B mit der Befestigungseinrichtung 12 in Form eines exemplarischen Hakens 14 gezeigt.

In den Figuren 2A und 2B ist ferner jeweils eine Hubeinrichtung 56 gezeigt, die zum Beispiel einen (Hub-) Zylinder 58 und eine Plattform 60 aufweisen kann, um ein Stückgut 62, welches in die Transporttasche 10 geladen ist, in der vertikalen Richtung Y aus der Transportstellung der Fig. 2A in die Entladestellung der Fig. 2 zu bewegen, wie es durch einen Hilfspfeil 55 angedeutet ist. Der Boden 32 wird von einer - willkürlich gewählten - Höhe 0 auf eine Höhe h1 bewegt, auf der die Unterseite 22 des Grundkörpers 16 angeordnet ist. Die Transporttasche 10 hat in der Transportstellung eine Gesamthöhe h2 und in der Entladestellung eine Gesamthöhe von h2-h1. In der Entladestellung der Fig. 2B steht das zu entladende Stückgut 62 flach auf dem Boden 32. Die Plattform 60 ist vorzugsweise flächig ausgebildet, kann aber auch zum Beispiel in Form eines Gitters oder eines Kamms ausgebildet sein.

In der Entladestellung der Fig. 2B sind die seitlichen Seiten 34-1 und 34-2 der Aufnahme 18 komprimiert und hängen vorzugsweise seitlich nach außen, wie gezeigt. Die Ausdehnung der seitlichen Seitenwände 28-1 und 28-2 des Grundkörpers 16 wird durch die Hubbewegung 55 nicht beeinflusst, das heißt ein Querschnitt des Grundkörpers 16 in der vertikalen xy-Ebene bleibt vorzugsweise unverändert, um eine Interaktion der Transporttasche 10 mit einer später noch zu erläuternden Schubeinrichtung zum seitlichen Entladen des Stückguts 62 (d.h. durch die Stirnseiten 24 oder 26) zu ermöglichen.

Solange die komprimierten seitlichen Seitenwände 34-1 und 34-2 der Aufnahme 18 nicht mit der Schubeinrichtung während eines seitlichen Entladens des Stückguts 62 kollidieren, d.h. kollisionsfrei sind, können die komprimierten Seitenwände 34-1 und 34-2 auch, zumindest teilweise, in das Innere 35 des Grundkörpers 16 gerichtet sein.

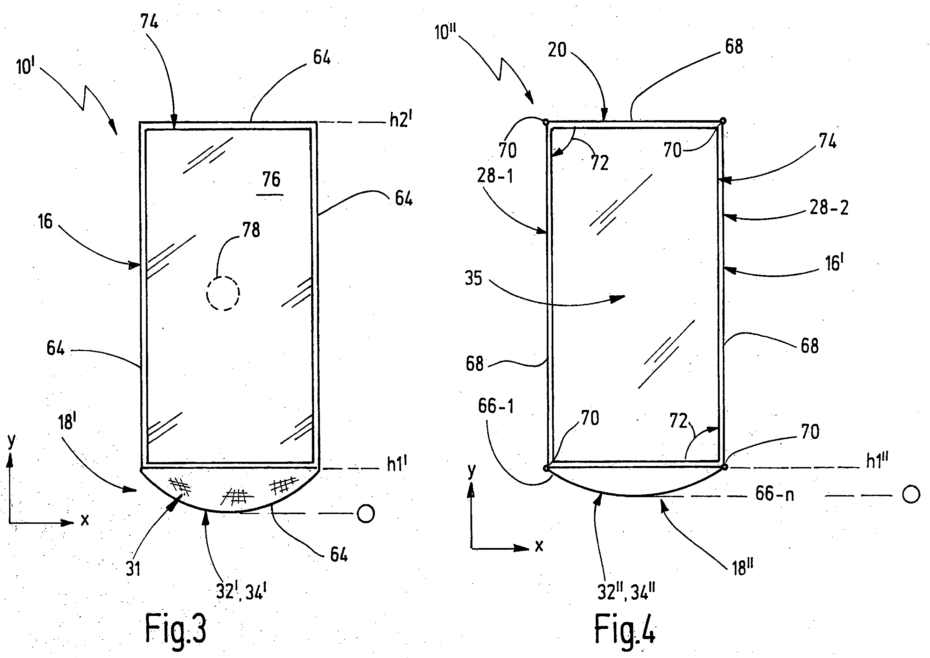

Unter Bezugnahme auf Fig. 3 ist eine Vorderseite einer weiteren Transporttasche 10' gezeigt. Bei der Transporttasche 10' ist die Aufnahme 18' derart ausgebildet, dass ihre Stirnseiten 31 vorzugsweise geschlossen ausgebildet sind und dass ihre seitlichen Seitenwände 34' und der Boden 32' nahtlos ineinander übergehen. Dies kann erreicht werden, indem die im Zusammenhang mit der Fig. 1 erwähnte Stoffbahn nicht wie sonst bei Transporttaschen im Stand der Technik üblich straff über die Unterseite 22 gespannt wird, sondern großzügig im unbeladenen Zustand der Tasche 10 unter dem Grundkörper 16 durchhängen darf. Die Aufnahme 18' hängt dabei derart durch, dass ein Stückgut 62 nicht seitlich aus der Transporttasche 10' fallen kann. Üblicherweise wird übrigens immer nur ein Stückgut 62 mit einer Transporttasche 10 bzw. 10' transportiert.

Eine Hubeinrichtung 56 kann dann den losen, flexiblen Boden 32', der vorzugsweise keinen Rahmen 46 aufweist, auf das Niveau h1' der Unterseite 22 des Grundkörpers 16 bewegen, insbesondere wenn zumindest die Aufnahme 18' durch ein Gewebe bzw. einen Stoff 64 gebildet ist.

Bezugnehmend auf Fig. 4 ist eine weitere Ausführungsform einer Transporttasche 10" gezeigt.

Die Transporttasche 10" unterscheidet sich von den Transporttaschen 10' der Figuren 1 und 2 sowie von der Transporttasche 10' der Fig. 3 wiederum durch die Ausgestaltung der Aufnahme 18". Die Aufnahme 18" wird hier durch plättchenförmige Leisten 66-1 bis 66-n (n ist eine beliebige ganze Zahl) gebildet, die entlang der Querrichtung Z miteinander verbunden sind und balgartig z.B. in der Längsrichtung X zusammenfaltbar sind, wenn die (hier nicht dargestellte) Hubeinrichtung 56 in der Vertikalen Y betätigt wird.

Des Weiteren ist in den Figuren 3 und 4 jeweils eine Schubeinrichtung 74 angedeutet, die einen schildförmigen Schieber 74 aufweisen kann, der wiederum durch einen pneumatisch oder hydraulisch betätigten Zylinder 78 in der Querrichtung Z oszillierend bewegbar ist. Die Fläche des Schiebers 76 ist vorzugsweise im Wesentlichen gleich groß wie der Querschnitt des Grundkörpers 16 in der horizontalen XY-Ebene. Der Schieber 76 kann von der hinteren Stirnseite 26 in das Innere 35 des Grundkörpers 16 der Transporttasche 10, 10' oder 10" eingeführt werden, wenn sich diese in der Entladestellung befindet, d. h. wenn die Hubeinrichtung 56 den Boden 32, 32' bzw. 32" auf ein Niveau der Unterseite 22 des Grundkörpers 16 angehoben hat. In diesem Fall kann das Stückgut 62 - kollisionsfrei - durch die vordere Stirnseite 24 (vgl. Fig. 1) ausgeschoben werden, und zwar in einer horizontalen Richtung, ohne dass das Stückgut 62 in der Y-Richtung fällt, wie es nachfolgend noch näher erläutert werden wird. Selbstverständlich kann der Entladevorgang auch in der umgekehrten Richtung erfolgen. Die Auswahl der Z-Richtung als Entladerichtung ist rein willkürlich und könnte durch jede andere Orientierung ersetzt werden.

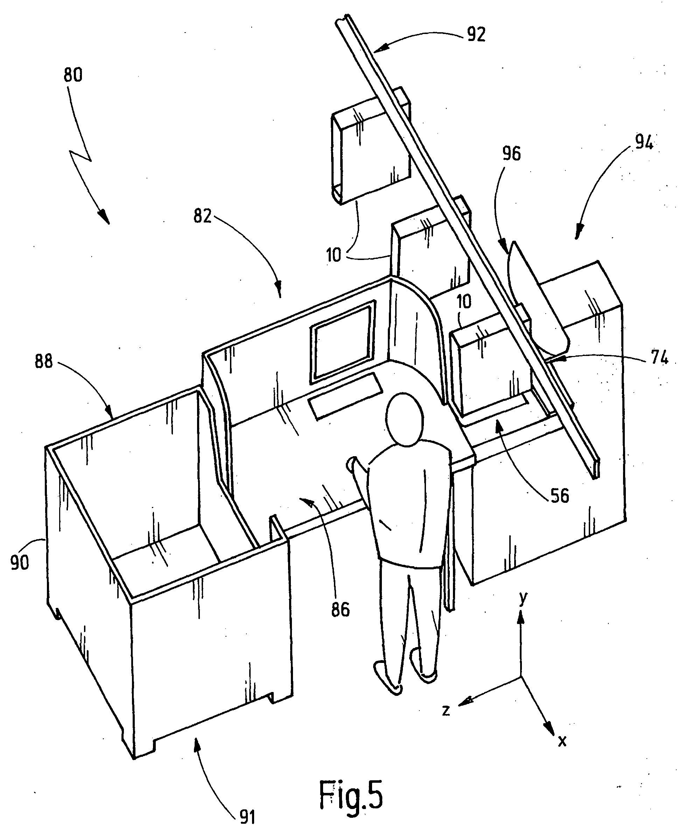

In Fig. 5 ist eine perspektivische Ansicht eines Hängefördersystems 80 mit einem (manuellen) Arbeitsplatz 82 gezeigt, an dem eine Bedienperson 84 an einer Arbeitsfläche 86 arbeiten kann, die vorzugsweise hüfthoch angeordnet ist.

In der Fig. 5 ist des Weiteren ein Auftrags-Ladehilfsmittel 88 z.B. in Form eine Containers 90 an einer Zielstelle 91 gezeigt, die direkt an den Arbeitsplatz 82 angrenzend angeordnet ist. Der Arbeitsplatz 82 ist direkt angrenzend an eine Entladestation 94 angeordnet, die über ein (Hängeförder-)Schienensystem 92 mit Transporttaschen 10 der oben beschriebenen Art versorgt wird.

Die Entladestation 94 kann eine oder mehrere Fixiereinrichtungen 96 aufweisen, um die Transporttaschen 10 während eines Entladevorgangs in einer vorbestimmten Stellung zu halten. Die Entladestation 94 weist eine Hubeinrichtung 56 und eine Schubeinrichtung 74 auf. Die Hubeinrichtung 56 wirkt in der Vertikalen (Y-Richtung). Die Schubeinrichtung 74 wirkt in der Horizontalen (z.B. Querrichtung Z), wie oben beschrieben.

Der Arbeitsplatz 82 kann ferner eine Anzeigeeinrichtung, wie zum Beispiel einen. Monitor oder dergleichen, sowie eine Eingabeeinrichtung aufweisen, wie zum Beispiel eine Tastatur oder eine Maus, um mit einem (nicht dargestellten) übergeordneten Lagerverwaltungssystem (Software und/oder Hardware) zu kommunizieren.

Die Bedienperson 84 lädt (automatisiert entladene) Stückgüter 62 manuell von der Arbeitsfläche 86 in den Container 90. Die Stückgüter 62 werden, vorzugsweise einzeln, (hängend) mittels der Transporttaschen 10 zum Arbeitsplatz 82 über das Schienensystem 92 transportiert. Die Entladestation 94 hebt mit ihrer Hubeinrichtung 56 den Boden 32 der Aufnahme 18 in einem ersten Schritt auf das Niveau der Unterseite 22 des Grundkörpers 16 an, so dass die Schubeinrichtung 74 mit ihrem Schieber 76 durch die hintere Stirnseite 26 in das Innere 35 des Grundkörpers 16 bewegt werden kann, um das geladene Stückgut 62 durch die vordere Stirnseite 24 horizontal auszuschieben. Da die vorzugsweise horizontal orientierte Arbeitsfläche 86 auf dem Niveau der Unterseite 22 der Transporttasche 10 angeordnet ist, fällt das Stückgut 62 nicht - wie im Stand der Technik üblich - herunter, sondern wird "sanft" seitlich aus der Transporttasche 10 ausgeschoben.

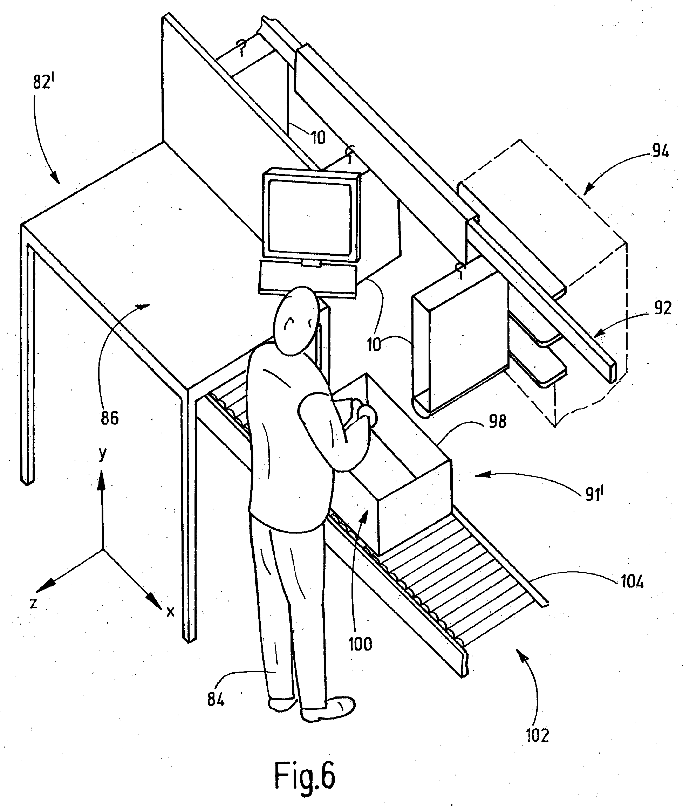

Fig. 6 zeigt eine perspektivische Ansicht eines weiteren Hängefördersystems 80, das wiederum ein Schienensystem 92 sowie eine Entladestation 94 aufweist, wobei die Entladestation 94 lediglich durch Strichlinien angedeutet ist. Anstatt die Stückgüter 62 aus den Transporttaschen 10 auf eine Arbeitsfläche 86 auszuschieben, werden die Stückgüter 62 auf Höhe einer oberen Öffnungskante 98 in einen Auftrags-Ladehilfsmittel 88 ausgeschoben. Das Auftrags-Ladehilfsmittel 88 ist hier exemplarisch in Form eines Kartons 100 gezeigt, der über ein Fördersystem 102 zu einer Zielstelle 91' transportierbar ist. Das Fördersystem 102 kann unter der Arbeitsfläche 86 eines weiteren Arbeitsplatzes 82' hindurchführen, wo Stückgüter 62 manipuliert werden können, sollte dies erforderlich sein. In der Fig. 6 ist exemplarisch ein Rollenförderer 104 gezeigt.

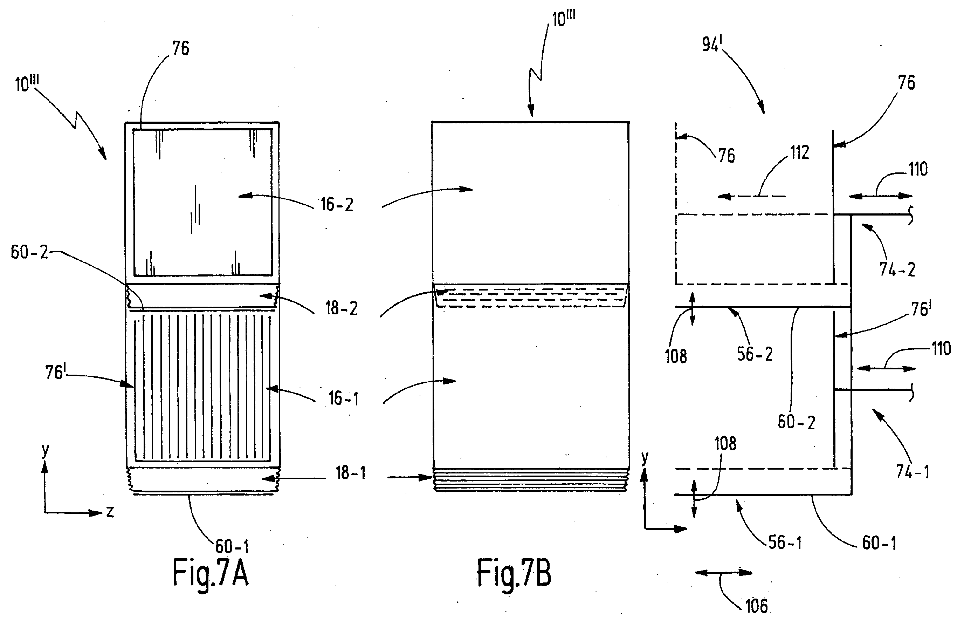

Bezug nehmend auf die Figuren 7A und 7B sind eine Vorderansicht (Fig. 7A) und eine Seitenansicht (Fig. 7B) einer weiteren gewandelten Transporttasche 10"' inkl einer Entladestation 94' gezeigt.

Die Transporttasche 10'" ist mehrteilig ausgebildet und weist z.B. einen ersten Grundkörper 16-1 und einen zweiten Grundkörper 16-2 auf, die hier exemplarisch kubisch ausgebildet sind. Jeder der Grundkörper 16-1 und 16-2 steht in Verbindung mit einer entsprechenden Aufnahme 18-1 bzw. 18-2, die in der Vertikalen Y mittels einer Hubplattform 60-1 bzw. 60-2 auf das Niveau der jeweiligen Unterseite 22-1 bzw. 22-2 gehoben werden kann.

Zu diesem Zweck werden die Hubeinrichtungen 56-1 und 56-2 unter die Böden 32-1 und 32-2 der Aufnahmen 18-1 und 18-2 in der Querrichtung Z bewegt, wie es in Fig. 7B durch einen Hilfspfeil 106 angedeutet ist. Gleichzeitig können durch diese Bewegungen 106 die Schubeinrichtungen 74-1 und 74-2 vor den Stirnseiten 26 in Position gebracht werden. Es versteht sich, dass sowohl die Hubeinrichtungen 56-1 und 56-2 als auch die Schubeinrichtungen 74-1 und 74-2 jeweils getrennt voneinander beweglich ausgestaltet sein können.

Die Hubplattformen 60-1 und 60-2 können angehoben und abgesenkt werden, wie es durch Hilfspfeile 108 angedeutet ist. Die Schieber 76' und 76 der Schubeinrichtungen 74-1 und 74-2 können in der Querrichtung Z ein- und ausgefahren werden, wie es durch Hilfspfeile 110 angedeutet ist. Der in der Fig. 7B oben gezeigte Schieber 76 kann relativ zur Hubeinrichtung 56-2 in der Querrichtung Z ein- und ausgefahren werden. Ein ausgefahrener Zustand ist in der Fig. 7B durch Strichlinien angedeutet, wobei der Schieber 76 entlang eines Hilfspfeils 112 bewegt wurde.

Der Schieber 76 ist plattenförmig ausgebildet und kann aber auch zum Beispiel kammartig ausgebildet sein, wie es für den Schiebers 76' gezeigt ist. Bei einer kammartigen oder ähnlichen Ausführung ist es nicht zwingend erforderlich, dass die hintere Stirnseite 26 des Grundkörpers 16 offen ausgebildet ist. Die hintere Stirnseite 26 kann in diesem Fall (nicht dargestellte) Schlitze aufweisen, durch die Schieber 76' hindurchgreifen.

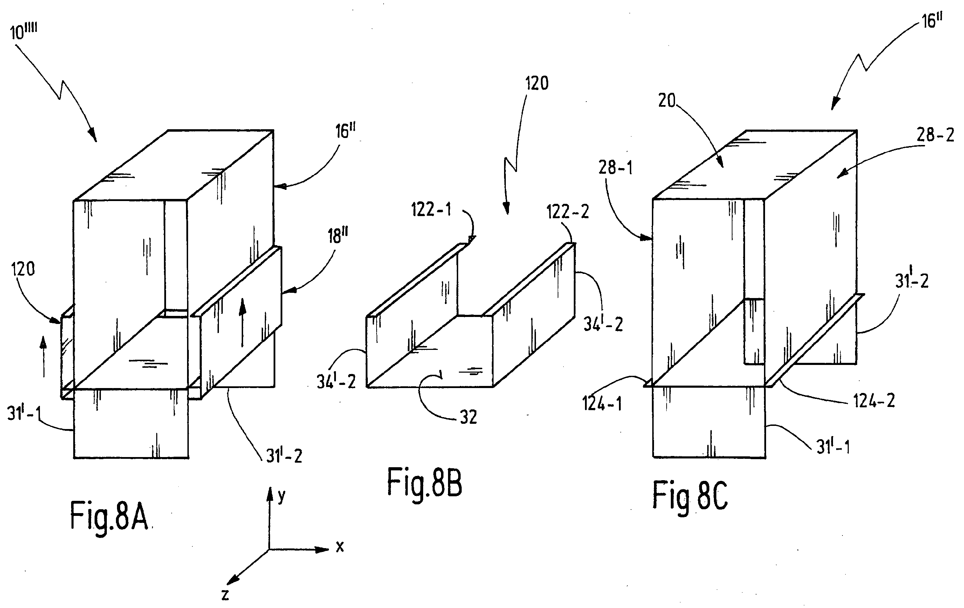

In der perspektivischen Darstellung der Fig. 8A bis 8C ist eine weitere Transporttasche 10"" (Fig. 8A) gezeigt, die eine Aufnahme 18" (Fig. 8B) mit steifen Seitenwänden 34' und einen Grundkörper 16" (Fig. 8C) aufweist.

Die Transporttasche 10"" ist in Fig. 8A kurz vor dem Erreichen ihrer Entladstellung gezeigt. Die Aufnahme 18" wird mit einer (nicht dargestellten) Hubeinrichtung 56 angehoben. Die Aufnahme 18" kann in Form eines Schubkastens 120 ausgebildet sein, der einen steifen Boden 32 und steife seitliche Seiten 34'-1 und 34'-2 aufweist. Die seitlichen Seiten 34' und der Boden 32 stehen senkrecht aufeinander. Die seitlichen Seiten 34' weisen jeweils einen Kragen 122 auf, der parallel gegenüberliegend zum Boden 32 an den seitlichen Seiten 34' vorgesehen ist, um mit einem weiteren Kragen 124 zu interagieren, der am Grundkörper 16" vorgesehen ist. Die weiteren Kragen 124-1 und 124-2 erstrecken sich auf Höhe der Unterseite 22 des Grundkörpers 16" in horizontaler Richtung an der Außenseite der seitlichen Seiten 28-1 und 28-2 und sind senkrecht zu den seitlichen Seiten 28 orientiert. Die Stirnseiten 31' sind hier Teil des Grundkörpers 16" und erstrecken sich als Rückhalteeinrichtung an den Stirnseiten 24 und 26 vertikal nach unten. Die (geschlossenen und steifen) Stirnseiten 31' stellen eine Vorsetzung der offenen Stirnseiten 24 und 26 dar. Es versteht sich, dass der Schubkasten 120 auch eine andere Form aufweisen kann. Die Stirnseiten 31' können auch Teil des Schubkasten 120 sein, wobei die Stirnseiten 31' gegenüber dem Boden 32 beweglich ausgebildet sind.

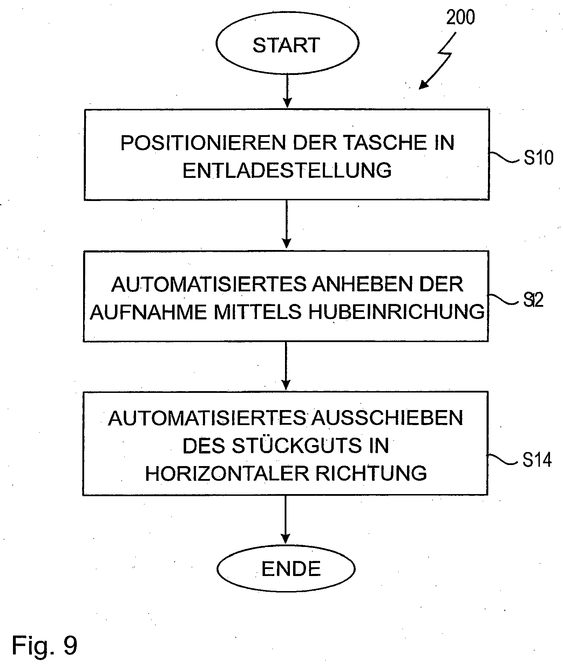

Bezugnehmend auf Fig. 9 ist ein Flussdiagramm eines Verfahrens 200 zum automatisierten Entladen einer beladenen Transporttasche 10 gezeigt.

In einem ersten Schritt S10 wird die beladene Transporttasche 10 in einer Entladestellung positioniert. Dies bedeutet, dass die Transporttasche 10 derart relativ zu einer Entladestation 94 positioniert wird, dass der Schieber 76 der Schubeinrichtung 74 in das Innere 35 des Grundkörpers eingreifen und die Hubeinrichtung 56 den Boden 32 auf das Niveau der Unterseite 22 anheben kann.

Anschließend wird in einem Schritt S12 der Boden 32 der Aufnahme 18 mittels der Hubeinrichtung 56 automatisiert auf das Niveau der (offenen) Unterseite 22 des Grundkörpers 16 angehoben. Auf diese Weise werden das oder die Stückgüter 62 in das Innere 35 des Grundkörpers 16 angehoben und kollidieren nicht mehr mit der Rückhalteeinrichtung, wie sie exemplarisch durch geschlossene, flexible Stirnseiten 31 der Aufnahme 18 oder durch die Streben 38 des Grundkörpers 16 im Bereich der Unterseite 22 realisiert sein kann.

Wenn das oder die Stückgüter 62 auf das Niveau der Unterseite 22 des Grundkörpers 16 angehoben sind, können das oder die Stückgüter 62 automatisiert in der horizontalen Richtung mittels des Schiebers 76 der Schubeinrichtung 74 ausgeschoben werden.

Danach endet das Verfahren gemäß der Erfindung.

Die Rückhalteeinrichtung ist vorzugsweise derart ausgebildet, dass der Querschnitt des Grundkörpers 16 bei einem Wechsel der Transporttasche 10 aus der Transportstellung (Fig. 2A) in die Entladestellung (Fig. 2B) möglichst unverändert bleibt, um eine kollisionsfreie Interaktion mit der Schubeinrichtung 74 zu gewährleisten.

Die Transporttasche 10 kann klappbar ausgebildet sein, wie es in Fig. 4 angedeutet ist. In der Fig. 4 kann die Transporttasche 10" in die Vertikale Y zusammengeklappt werden, indem die Oberseite 20 des Grundkörpers 16, die auch in Form einer Kunststoffplatte 68 ausgebildet sein kann, auf die linke seitliche Seite 28-1 um eine Schwenkachse 70 verschwenkt wird, wie es durch einen Hilfspfeil 72 angedeutet ist. Die rechte seitliche Seite 28-2 des Grundkörpers 16' wird ebenfalls auf die linke seitliche Seite 28-1 geklappt. Die Unterseite 22 wird dabei in die Vertikale Y verschwenkt und kommt mit einem unteren Bereich der rechten seitlichen Seite 28-2 in Anlage.

Die Transporttasche 10 ist vorzugsweise spiegelsymmetrisch ausgebildet, so dass sie in einer horizontalen Richtung sowohl von links als auch von rechts entladen werden kann. Dies erleichtert die Handhabung der Transporttaschen 10, weil diese in Bezug auf das Schienensystem 92 nicht speziell ausgerichtet werden müssen.

Ferner versteht es sich, dass die geladenen Stückgüter 62 auch auf eine (nicht dargestellte) Rutsche horizontal ausgeschoben werden können, wobei die Rutsche gegenüber der Horizontalen (XZ-Ebene) einen beliebigen Winkel aufweisen kann.

Außerdem versteht es sich, dass unter dem Begriff "geschlossene Seiten" jegliche Struktur zu verstehen ist, die ein (Durch-)Fallen des Stückguts 62 aus der Transporttasche 10 verhindert.

Unter einem Auftrags-Ladehilfsmittel ist ein Ladehilfsmittel (zum Beispiel eine Palette, ein Tablar, ein Behälter, ein Karton oder Ähnliches) zu verstehen, das gemäß einem Kommissionierauftrag beladen wird, um an den Auftraggeber versandt zu werden.

Die obenstehende Beschreibung der Figuren hält sich bei der Wahl der Orientierungen der Koordinatensysteme generell an die in der (Intra-)logistik üblichen Bezeichnungen, so dass die Längsrichtung mit X, die Tiefe mit Z und die (vertikale) Höhe mit Y bezeichnet wurden.

Des Weiteren wurden gleiche Teile und Merkmale mit den gleichen Bezugsziffern versehen. Die in der Beschreibung enthaltenen Offenbarungen sind sinngemäß auf gleiche Teile und Merkmale mit denselben Bezugszeichen übertragbar. Lage- und Orientierungsangaben (wie zum Beispiel "oben", "unten", "seitlich", "längs", "quer", "horizontal", "vertikal" oder dergleichen) sind auf die unmittelbar beschriebene Figur bezogen. Bei einer Änderung der Lage oder Orientierung sind die Angaben aber sinngemäß auf die neue Lage bzw. Orientierung zu übertragen.

## Patentansprüche

1. Hängefördersystem (80) mit einer Transporttasche (10) zur automatischen Entladung eines geladenen Stückguts (62) und mit einer Entladestation (94), wobei die Transporttasche (10) aufweist:
einen Grundkörper (16) sowie einer daran anschließenden, separaten Aufnahme (18);
wobei der Grundkörper eine Oberseite (20), eine Unterseite (22), seitliche Seiten (28) und Stirnseiten (24, 26) aufweist;
wobei die Aufnahme (18) einen Boden (32), eine Oberseite (30), Stirnseiten (31) und seitliche Seiten (34) aufweist;
wobei die Entladung der Transporttasche (10) durch eine der Stirnseiten (24) des Grundkörpers (16) hindurch erfolgt, die offenen ausgebildet ist, wobei eine gegenüberliegende Stirnseite (26) vorzugsweise ebenfalls offen ausgebildet ist;
wobei die Unterseite (22) des Grundkörpers (16) an die Oberseite (30) der Aufnahme (18) koppelt, um einen Aufnahmeraum unterhalb des Grundkörpers (16) zu definieren, und wobei die Unterseite (22) des Grundkörpers (16), insbesondere in einem unbeladenen Zustand (Fig. 1) der Transporttasche (10), offen ausgebildet ist, wobei die Oberseite (30) der Aufnahme (22) im unbeladenen Zustand der Transporttasche (10) offen ausgebildet ist;
wobei zumindest die seitlichen Seiten (28) des Grundkörpers (16), die seitlichen Seiten (34) der Aufnahme (18) und der Boden (32) der Aufnahme (18) geschlossen ausgebildet sind;
wobei zumindest die seitlichen Seiten (34) der Aufnahme (18) derart ausgebildet sind, dass der Boden (32) in eine Entladestellung (Fig. 2B) der Transporttasche (10) anhebbar ist, in welcher der Boden (32) in die Unterseite (22) des Grundkörpers (16) gehoben ist;
wobei die Transporttasche (10) jeweils eine Rückhalteeinrichtung aufweist, die sich im Bereich der Stirnseiten (24, 26, 31) zumindest entlang eines Übergangs zwischen dem Grundkörper (16) und der Aufnahme (18) erstreckt;
und wobei die Entladestation (94) eine Hubeinrichtung (56) und eine Schubeinrichtung (74) aufweist;
wobei die Hubeinrichtung (56) eingerichtet ist, den Boden (32) der Aufnahme (18) der mit mindestens einem Stückgut (62) beladenen Transporttasche (10), wenn sich die Transporttasche (10) in einer Entladestellung (Fig. 2B) befindet, in vertikaler Richtung (Y) derart anzuheben, dass das mindestens eine Stückgut (62) mittels der Schubeinrichtung (74) durch eine der Stirnseiten (24) des Grundkörpers (16) der Transporttasche (10) horizontal ausschiebbar ist; und
wobei die Schubeinrichtung (74) einen Schieber (76) aufweist, der durch die andere Stirnseite (26) des Grundkörpers (16) in ein Inneres (35) des Grundkörpers (16) eingreift, wo sich das mindestens eine Stückgut (62) befindet, wenn der Boden (32) angehoben ist.

2. Hängefördersystem (80) nach Anspruch 1, wobei der Grundkörper (16) ein Parallelepiped, vorzugsweise ein Quader oder Kubus, ist.

3. Hängefördersystem (80) nach einem der vorhergehenden Ansprüche, wobei die Stirnseiten (31) der Aufnahme (18) geschlossen, und vorzugsweise flexibel, ausgebildet sind.

4. Hängefördersystem (80) nach einem der vorhergehenden Ansprüche, wobei geschlossenen Seiten (20, 28, 34) mit einem Gewebe (64) bespannt sind.

5. Hängefördersystem (80) nach einem der vorhergehenden Ansprüche, wobei der Boden (32) der Aufnahme aus einem steifen Material gebildet ist.

6. Hängefördersystem (80) nach einem der vorhergehenden Ansprüche, wobei eine Fläche des Bodens (32) im Wesentlichen einer Fläche der Unterseite (22) des Grundkörpers (16) gleicht.

7. Hängefördersystem (80) nach einem der vorhergehenden Ansprüche, wobei zumindest untere Kanten der Stirnseiten (24, 26) des Grundkörpers (16) oder oberen Kanten der Stirnseiten (31) der Aufnahme (18) durch jeweils eine Strebe (38), vorzugsweise eine Draht- oder Karbonstrebe, definiert sind.

8. Hängefördersystem (80) nach Anspruch 7, wobei zumindest alle Kanten des Grund körpers (16) durch miteinander verbundene Streben (38, 40, 42) definiert sind, die ein Gestell (36) definieren, das vorzugsweise derart mit einem Stoff (64) bespannt ist, das der Stoff (64) als Stoffbahn um die Oberseite (20) des Grundkörpers (16), die seitlichen Seiten (28) des Grundkörpers (16), die seitlichen Seiten (34) der Aufnahme (18) und den Boden (32) der Aufnahme (18) umläuft und im Bereich der Aufnahme (18) in einem unbeladenen Zustand der Transporttasche (10) durchhängt.

9. Hängefördersystem nach Anspruch 1, wobei die Entladestation (94) ferner mindestens eine Fixiereinrichtung (96) aufweist, um die Transporttasche (10) in der Entladestellung derart zu fixieren, dass der Schieber (76) kollisionsfrei ins Innere (35) der Transporttasche (10) einführbar ist.

10. Hängefördersystem nach einem der Ansprüche 1 oder 10, das ferner eine Arbeitsstation (82) aufweist, die direkt an die Entladestation (94) angrenzend angeordnet ist und die eine Arbeitsfläche (86) umfasst, die horizontal orientiert ist und die sich im Wesentlichen bündig an die Unterseite (22) der Transporttasche (10) anschließt.

11. Hängefördersystem nach einem der Ansprüche 1, 10 oder 11, das ferner eine Zielstelle (91') aufweist, wo ein Auftrags-Ladehilfsmittel (88) derart positionierbar ist, dass sich eine obere Öffnungskante (98) des Auftrags-Ladehilfsmittels (88) im Wesentlichen bündig an die Unterseite (22) der Transporttasche (10) anschließt.

12. Hängefördersystem nach Anspruch 11, wobei die Zielstelle (91') Teil eines Fördersystems (102) ist, das Auftrags-Ladehilfsmittel (88) transportiert.

13. Verfahren (200) zum automatisierten Entladen einer Hängeförder-Transporttasche (10) mit den folgenden Schritten:
- Positionieren (S10) der mit mindestens einem Stückgut (62) beladenen Transporttasche (10) in einer Entladestellung;
- automatisiertes Anheben (S12) einer Aufnahme (18) der Transporttasche (10) mittels einer Hubeinrichtung (56) derart, dass sich ein Boden (32) der Aufnahme (18) auf Höhe einer offenen Unterseite (22) eines Grundkörpers (16) der Transporttasche (10) befindet; und
- automatisiertes Ausschieben (S14) des mindestens einen Stückguts (62) aus der Transporttasche (10) mittels einer Schubeinrichtung (74), indem ein Schieber (76) der Schubeinrichtung (74) durch eine Stirnseite (26) des Grundkörpers (16) in ein Inneres (35) des Grundkörpers (16) einfährt und das mindestens eine Stückgut (62) durch eine gegenüberliegende, offene Stirnseite (24) des Grundkörpers (16) seitlich ausschiebt.

## Claims

1. An overhead-conveying system (18) having an overhead-conveying transport bag (10) for automatically unloading a loaded piece good (62) and an unloading station (94), wherein the transport bag (10) comprises:
a basic structure (16) as well as a separate receiving device (18), which is arranged adjacent thereto;
wherein the basic structure comprises a top side (20), a bottom (22), lateral sides (28), and front sides (24, 26);
wherein the receiving device (18) comprises a base (32), a top side (30), front sides (31), and lateral sides (34);
wherein the unloading of the transport bag (10) is performed through one of the front sides (24) of the basic structure (16) which is formed open, wherein an opposite front side (26) preferably is formed open as well;
wherein the bottom (22) of the basic structure (16) couples to the top side (30) of the receiving device (18) for defining a receiving space beneath the basic structure (16), and wherein the bottom (22) of the basic structure (16), in particular in a non-loaded state (Fig. 1) of the transport bag (10), is formed open, wherein the top side (30) of the receiving device (22) is formed open in the non-loaded state of the transport bag (10);
wherein at least the lateral sides (28) of the basic structure (16), the lateral sides (34) of the receiving device (18), and the base (32) of the receiving device (18) are closed;
wherein at least the lateral sides (34) of the receiving device (18) are formed such that the base (32) is liftable into an unloading position (Fig. 2B) of the transport bag (10), in which the base (32) is lifted into the bottom (22) of the basic structure (16),
wherein the transport bag (10) respectively comprises a retaining device extending in the region of the front sides (24, 26, 31) at least along a transition between the basic structure (16) and the receiving device (18);
and wherein the unloading station (94) comprises a lifting device (56) and a pushing device (74);
wherein the lifting device (56) is configured to lift the base (32) of the receiving device (18) of the transport bag (10), which is loaded with at least one piece good (62) if the transport bag (10) is located in an unloading position (Fig. 2B), in a vertical direction (Y) such that the at least one piece good (62) can be pushed out horizontally by means of the pushing device (74) through one of the front sides (24) of the basic structure (16) of the transport bag (10); and
wherein the pushing device (74) comprises a pusher (76) which reaches into an interior (35) of the basic structure (16), where the at least one piece good (62) is located when the base (32) is lifted, through the other front side (26) of the basic structure (16).

2. The overhead-conveying system of claim 1, wherein the basic structure (16) is a parallelepiped, preferably rectangular parallelepiped or a cube.

3. The overhead-conveying system of one of the preceding claims, wherein the front sides (31) of the receiving device (18) are formed closed, and preferably flexible.

4. The overhead-conveying system of one of the preceding claims, wherein closed sides (20, 28, 34) are covered by a fabric (64).

5. The overhead-conveying system of one of the preceding claims, wherein the base (32) of the receiving device is formed of a rigid material.

6. The overhead-conveying system of one of the preceding claims, wherein an area of the base (32) substantially equals an area of the bottom (22) of the basic structure (16).

7. The overhead-conveying system of one of the preceding claims, wherein at least lower edges of the front sides (24, 26) of the basic structure (16), or upper edges of the front sides (31) of the receiving device (18), are respectively defined by a strut (38), preferably by a wire strut or carbon strut.

8. The overhead-conveying system of claim 7, wherein at least each of the edges of the basic structure (16) is defined by struts (38, 40, 42) being connected to each other defining a frame (36), which is preferably covered with a fabric (64), such that the fabric (64), as a fabric web, surrounds the top side (20) of the basic structure (16), the lateral sides (28) of the basic structure (16), the lateral sides (34) of the receiving device (18), and the base (32) of the receiving device (18), and such that the fabric (64) sags in the region of the receiving device (18) in a non-loaded state of the transport bag (10).

9. The overhead-conveying system of claim 1, wherein the unloading station (94) further comprises at least one fixing device (96) for fixing the transport bag (10) in the unloading position such that the pusher (76) is insertable into the interior (35) of the transport bag (10) without collisions.

10. The overhead-conveying system of one of the claims 1 or 10, which further comprising a working station (82) which is arranged directly adjacent to the unloading station (94) and comprises a working surface (86), which is orientated horizontally and is substantially flush-coupled to the bottom (22) of the transport bag (10).

11. The overhead-conveying system of one of the claims 1, 10, or 11, which further comprises a target location (91'), where an order-load support (88) can be positioned such that an upper opening edge (98) of the order-load support (88) is substantially flush-coupled to the bottom (22) of the transport bag (10).

12. The overhead-conveying system of claim 11, wherein the target location (91') is part of a conveying system (102), which transports the order-load support (88).

13. A method (200) for automatically unloading an overhead-conveying transport bag (10), comprising the steps of;
- positioning (S10) the transport bag (10), which is loaded with at least one piece good (62), in an unloading position;
- automatically lifting (S12) a receiving device (18) of the transport bag (10) by means of a lifting device (56) such that a base (32) of the receiving device (18) is located at a height of an open bottom (22) of a basic structure (16) of the transport bag (10); and
- automatically pushing (S14) the at least one piece good (62) out of the transport bag (10) by means of a pushing device (74) by inserting a pusher (76) of the pushing device (74) through a front side (26) of the basic structure (16) into an interior (35) of the basic structure (16) and laterally pushing out the at least one piece good (62) through an oppositely arranged open front side (24) of the basic structure (16).

## Revendications

1. Système de convoyeur aérien (80) avec une poche de transport (10) pour le déchargement automatique d'un produit de détail (62) chargé et avec un poste de déchargement (94), la poche de transport (10) comportant :
un corps de base (16), ainsi qu'un logement (18) séparé qui s'y raccorde ;
le corps de base comportant une face supérieure (20), une face inférieure (22), des faces latérales (28) et des faces frontales (24, 26) ;
le logement (18) comportant un fond (32), une face supérieure (30), des faces frontales (31) et des faces latérales (34) ;
le déchargement de la poche de transport (10) s'effectuant à travers l'une des faces frontales (24) du corps de base (16), qui est conçue en étant ouverte, une face frontale (26) opposée étant de préférence également conçue en étant ouverte ;
la face inférieure (22) du corps de base (16) étant couplée sur la face supérieure (30) du logement (18) pour définir un espace de logement en-dessous du corps de base (16) et la face inférieure (22) du corps de base (16), notamment dans un état non chargé (figure 1) de la poche de transport (10) étant conçue en étant ouverte, la face supérieure (30) du logement (22) étant conçue en étant ouverte, dans l'état non chargé de la poche de transport (10) ;
au moins les faces latérales (28) du corps de base (16), les faces latérales (34) du logement (18) et le fond (32) du logement (18) étant conçus en étant fermés ;
au moins les faces latérales (34) du logement (18) étant conçues de telle sorte que le fond (32) puisse être soulevé dans une position de déchargement (figure 2B) de la poche de transport (10) dans laquelle le fond (32) est relevé dans la face inférieure (22) du corps de base (16) ;
la poche de transport (10) comportant chaque fois un dispositif de retenue, qui dans la zone des faces frontales (24, 26, 31) s'étend au moins le long d'un passage entre le corps de base (16) et le logement (18) ;
et le poste de déchargement (94) comportant un dispositif de levage (56) et un dispositif de poussée (74) ;
le dispositif de levage (56) étant installé pour relever en direction verticale (Y) le fond (32) du logement (18) de la poche de transport (10) chargée avec au moins un produit de détail (62), lorsque la poche de transport (10) se trouve dans une position de déchargement (figure 2B), de telle sorte qu'au moyen du dispositif de poussée (74), l'au moins un produit de détail (62) puisse être expulsé à l'horizontale à travers l'une des faces frontales (24) du corps de base (16) de la poche de transport (10) ; et
le dispositif de poussée (74) comportant un coulisseau (76) qui à travers l'autre face frontale (26) du corps de base (16) s'engage dans un intérieur (35) du corps de base (16) dans lequel se trouve l'au moins un produit de détail (62), lorsque le fond (32) est relevé.

2. Système de convoyeur aérien (80) selon la revendication 1, le corps de base (16) étant un parallélépipède, de préférence un parallélépipède rectangle ou un cube.

3. Système de convoyeur aérien (80) selon l'une quelconque des revendications précédentes, les faces frontales (31) du logement (18) étant conçues en étant fermées et de préférence souples.

4. Système de convoyeur aérien (80) selon l'une quelconque des revendications précédentes, des faces fermées (20, 28 34) étant tendues d'un textile (64).

5. Système de convoyeur aérien (80) selon l'une quelconque des revendications précédentes, le fond (32) du logement étant conçu dans une matière rigide.

6. Système de convoyeur aérien (80) selon l'une quelconque des revendications précédentes, une surface du fond (32) ressemblant sensiblement à une surface de la face inférieure (22) du corps de base (16).

7. Système de convoyeur aérien (80) selon l'une quelconque des revendications précédentes, au moins des arêtes inférieures des faces frontales (24, 26) du corps de base (16) ou des arêtes supérieures des faces frontales (31) du logement (18) étant définies par chaque fois un montant (38), de préférence un montant en fil métallique ou en carbone.

8. Système de convoyeur aérien (80) selon la revendication 7, au moins toutes les arêtes du corps de base (16) étant définies par des montants (38, 40, 42) reliés ensemble qui définissent un châssis (36) qui est tendu d'un tissu (64) de préférence de sorte qu'en tant que lé de tissu, le tissu (64) entoure la face supérieure (20) du corps de base (16), les faces latérales (28) du corps de base (16), les faces latérales (34) du logement (18) et le fond (32) du logement (18) et dans la région du logement (18) s'infléchisse dans un état non chargé de la poche de transport (10).

9. Système de convoyeur aérien selon la revendication 1, le poste de déchargement (94) comportant par ailleurs au moins un système de fixation (96) pour fixer la poche de transport (10) dans la position de déchargement de telle sorte que le coulisseau (76) puisse être introduit sans collision à l'intérieur (35) de la poche de transport (10).

10. Système de convoyeur aérien selon l'une quelconque des revendications 1 ou 10, qui comporte par ailleurs un poste de travail (82) qui est placé en étant directement adjacent au poste de déchargement (94) et qui comprend une surface de travail (86) qui est orientée à l'horizontale et qui se raccorde sensiblement à fleur de la face inférieure (22) de la poche de transport (10).

11. Système de convoyeur aérien selon l'une quelconque des revendications 1, 10 ou 11 qui comporte par ailleurs un point cible (91') sur lequel un auxiliaire de chargement (88) de commandes est positionnable de telle sorte qu'une arête d'ouverture (98) supérieure de l'auxiliaire de chargement (88) de commandes se raccorde sensiblement à fleur sur la face inférieure (22) de la poche de transport (10).

12. Système de convoyeur aérien selon la revendication 11, le point cible (91') étant une partie d'un système de convoyage (102) qui transporte des auxiliaires de chargement (88) de commandes.

13. Procédé (200) destiné au déchargement automatisé d'une poche de transport (10) de convoyage aérien, avec les étapes suivantes :
- positionnement (S10) de la poche de transport (10) chargée d'au moins un produit de détail (62) dans une position de déchargement ;
- soulèvement (S12) automatisé d'un logement (18) de la poche de transport (10) au moyen d'un dispositif de levage (56), de telle sorte qu'un fond (32) du logement (18) se trouve à hauteur d'une face inférieure (22) ouverte d'un corps de base (16) de la poche de transport (10) ; et
- expulsion (S14) automatisée de l'au moins un produit de détail (62) hors de la poche de transport (10) au moyen d'un dispositif de levage (74) en ce qu'un coulisseau (76) du dispositif de poussée (74) s'introduit à travers une face frontale (26) du corps de base (16) dans un intérieur (35) du corps de base (16) et expulse latéralement l'au moins un produit de détail (62) à travers une face frontale (24) ouverte opposée du corps de base (16).
